# EUROPEAN PATENT APPLICATION

(11) **EP 4 567 375 A1**
(43) Date of publication of application: **11.06.2025**
(21) Application number: 23219554.5
(22) Date of filing: 21.12.2023
(51) Int. Cl.: G01B 21/32, G01M 5/00

(54) **SYSTEM AND METHOD FOR THE CALCULATION AND VISUALISATION OF SHIFTS IN CIVIL OR ENGINEERING STRUCTURES AND A CONTROLLER USED IN SUCH SYSTEM**

(30) Priority: 04.12.2023 PL 44698623
(71) Applicant: Geoalpin Sp.z.o.o., 01-692 Warszawa (PL)
(72) Inventor: Saloni, Lech, Warszawa (PL); Rakoska, Zuzanna, Grodzisk Mazowiecki (PL); Piasta, Lukasz, Warszawa (PL); Szerszen, Andrzej, Warszawa (PL)
(74) Representative: Jedrzejewski, Michal

(57) **Abstract**

The invention concerns a system and method of calculation and visualisation of shifts in civil structures. The invention further concerns a controller used in said system.

## Description

The invention concerns a system and method for calculating and visualizing shifts in civil or engineering structures. The invention further concerns a controller used in said system..

We know the following solutions from prior art:
Publication PL205764B1 discloses a uniaxial light clinometer designed for measuring plane inclination along a single axis, particularly for measuring the inclination of buildings, stacks, and radio antenna masts, provided with a mechanical transducer consisting of a movable screen (3) attached to a strand (2) and located between two fixed screens (5' and 5") that together form two gaps. The location of the mechanical measuring transducer relative to the arrangement of two gaps transmiting light fluxes into two photoelectric detectors (4' and 4") causes the formation of the clinometer output signal in the form of an electric voltage that is proportional to the size difference between the gaps, which is a result of the location of the mechanical measuring transducer relative to the arrangement of those gaps.

Publication PL430286A discloses a system for measuring deformations of at least one component of at least one tested structure, comprising at least one marker (1) permanently attached to the component of the tested structure, at least one sensor (2) configured and programmed for recording data related to the position of the marker (1) in the form of digital information, a processing unit (4) configured and programmed for processing data related to the position of the marker (1), linked for communication with the sensor (2), preferably via a receiver (3), characterised in that the marker (1) comprises at least ten characteristic points emitting light. The invention also encompasses a method for measuring deformations in the tested structure used in such a system, which method covers the following steps: (a) recording and, preferably, preliminary processing data related to the position of the marker (1) in the form of digital information by means of the sensor (2); (b) transmission of that digital information to the processing unit (4), preferably via the receiver (3) that, preferably, compresses the received digital information before transmitting it to the processing unit (4), and is characterised in that a marker (1) is used comprising at least ten characteristic points emitting light and knowing the reference model of the marker's (1) characteristic points, the reference position of the marker's (1) midpoint and the reference rotation of the marker (1), (c) we determine the rotation and position of the marker's (1) midpoint by virtually rotating and fitting the reference model of the marker's (1) characteristic points to the digital information and (d) we determine the shift and rotation of the marker (1) by comparing the rotation and position of the marker's (1) midpoint, as determined in step (c), to the reference position of the marker's (1) midpoint and the reference rotation of the marker (1).

Publication EP3567341 discloses an Augmented Reality (AR)-based system for the purpose of at least one of surveying, inspecting, fitting, adjusting, and building an object, said system comprising a mobile sensor configured for measuring an object and for being manoeuvrable, an AR-device comprising a camera configured for capturing an environment of the AR-device, and a display configured for providing a real view of the environment, and overlays onto the real view according to AR-data, said AR-data being spatially associated with the object, and a coordinate measuring instrument configured for determining a position of the mobile sensor and a position of the AR-device, a computer configured for reading and controlling the camera, providing a reciprocal data connection among the AR-device and the coordinate measuring instrument, providing the AR-data and, for each of the mobile sensor, the coordinate measuring instrument, and the object, at least one corresponding identification feature, establishing a referenced status of the AR-device relative to each of the mobile sensor, the coordinate measuring instrument, and the object by, in each case, identifying a respective identification feature captured by the camera, determining a pose of the AR-device relative to the respective identification feature based at least in part on the position of the AR-device determined by the coordinate measuring instrument, and generating the overlays in the referenced status based on the position of
the AR-device relative to at least one of the mobile sensor, the coordinate measuring instrument, and the object.

Publication WO2016049402A1 discloses a device comprising an augmented reality camera for use with 3D metrology equipment for producing 3D images from 2D camera images, which uses a two-dimensional (2D) camera in two different positions for providing the first and second 2D images with three common cardinal points. It further uses a three-dimensional (3D) measuring device for measuring two 3D coordinates. The first and the second 2D images and the two 3D coordinates are linked to produce a scalable 3D image.

Publication EP3246660A1 discloses a system and method for referencing a displaying device (2) relative to a surveying instrument (1), with displaying device (2) and surveying instrument (1) being spatially separated from each other and comprising communication means to communicate with each other, wherein the method comprises providing a first image (10) from the surveying instrument (1) and providing a second image (20) from the displaying device (2), wherein the first image (10) and the second image (20) at least in part cover the same scenery (3), detecting corresponding features (F1, F2, F3, F4, F1', F2', F3', F4') in the first image (10) and in the second image (20) with a processing unit, deriving a set of transition parameters based at least in part on the corresponding features (F1, F2, F3, F4, F1', F2', F3', F4') with said processing unit, referencing the displaying device (2) relative to the surveying instrument (1) regarding position and orientation based at least in part on the set of parameters with said processing unit. Publication EP1391692 discloses a monitoring system including measurement stations (S1, S2) that can be aimed at targets and a number of reference targets (c'i), each linked to station(s). Monitoring targets (ci) are mounted on the structure, each linked with at least two stations. A control unit (30) is linked with the stations to perform successive measurements of the coordinates of the targets associated with respective stations. A processor (34) analyses the coordinates and detects possible shifts of a monitoring target.

The solutions known do not include such solutions that would be characterised by the following:
(1) the use of reflectorless measurements for monitoring structural sets of buildings (surfaces, structural components) at the highest accuracy levels: elimination of the costly, time-consuming, and invasive installation of reflectors (and the related work at height), approvals by facility managers, easy adjustments, and keeping up with the changes in building structures and facades,
(2) versatility of the system: it is possible to use total stations by all leading manufacturers,
(3) open structure of the system: it is possible to implement new solutions that address particular demands arising from site conditions:
   - the architecture of the prepared solution enables it to develop, as it can be directly tied into a system of measurements obtained with non-surveying techniques, i.e. clinometers, crack gauges, pressure sensors, and others.

The characteristics listed above are shown by the solutions covered by this invention. The system of calculation and visualisation of shifts in civil or engineering structures according to the invention is characterised in that it comprises:
1) at least one controller connected on one side to a measuring device, in particular a total station, and to a central module on the other side,
2) a central module comprising a module for controlling data flow communicated wirelessly with the controller and linked to a database module, shift determination system module, and a module of the platform for transmitting and visualising user information, which is communicated by wire or wirelessly with the system user terminals,
wherein the controller is configured for:
1) receiving results from the measuring device and transmitting them to the central module,
2) maintaining and creating a measuring record (schedule of measurements),
3) controlling the measuring device, in particular, the total station; and the central module is configured for:
   1) storing in the database module the measurement results received each time from the controller(s),
   2) calculating and determining shifts in the shift calculation system module by means of a system of calculators and storing them in the database,
   3) using levelling algorithms in such a way that they eliminate the impact of instability of the measuring station where it has been shifted,
   4) processing data that includes shift calculations in order to transmit and visualise it to the system users via a visualisation platform module.

Another aspect of the invention relates to a method of calculation and visualisation of shifts in civil or engineering structures that uses data downloaded from measuring devices, characterised in that it uses the system described above, wherein
at least one controller:
   1) produces and maintains a measurement logbook (schedule),
   2) controls the measuring device connected therewith, in particular a total station,
   3) receives results from the measuring device and transmits them to the central module (3);
and the central module:
   1) stores in the database module the measurement results received each time from the controller(s),
   2) automatically calculates and determines shifts in the shift calculation system module by means of a system of calculators and stores them in the database module,
   3) uses levelling algorithms in such a way that they eliminate the impact of instability of the measuring station where it has been shifted,
   4) processes data that includes shift calculations in order to transmit and visualise it to the system users via a visualisation platform module;
   wherein the calculation and determination of shifts are carried out as follows:
   i. the following data is collected in order to automatically calculate and determine a shift:
      OBS1 - zero observations
      OBS2 - current observations
      XYH.PRZ - coordinates of all points in the network
      XYH.STA - reference point coordinates
      SHIFT.OBS - addition constants for the observations
      SHIFT.RESULTS - addition constants for shift results
      PARAMS (limD, limHz, limV, aprioriD, aprioriHz, aprioriV, Ddiff, MinObs%, limMX, limMY, limMH, dDX, dDY, dDH) - control parameters: three values for admissible observation differences between the first and the second position of the telescope, three "a priori" error values for the observations, admissible difference in distance to the point between zero observations and current observations, minimum number of observations relative to zero observations expressed in percent, three values of admissible errors for shifts at each axis, three values determining the admissible shift of reference points for which the point is deemed not to have shifted,
   ii. a quantity control is conducted for surveying observations (OBSBIEG1, OBSBIEG2 according to PARAM: MinObs% )
   iii. a quality control is conducted for surveying observations (OBSBIEG1, OBSBIEG2 according to PARAM: limD, limHz, limV, Ddiff,);
   iv. a control is conducted for the orientation of the measuring device - identification of different reading circle constant in OBSBIEG1 and OBSBIEG2;
   v. determination of surveying 3D shifts is carried out based on the least squares method and using free adjustment of observations OBSBIEG1 and OBSBIEG2 to the reference points (XYH.STA) - this is performed with a differential method of observation for multiple measuring stations;
   vi. an analysis is conducted for "a posteriori" errors in determined shifts of all points in the network (according to PARAM: limMX, limMY, limMH) as well as a check of non-standardised value m0 and calculation of errors for theoretical value m0=1 if the m0 value obtained is too low;
   vii. an analysis is conducted for the constancy of the assumed reference points (XYH.STA according to PARAM: limDX, limDY, limDH);
   viii. if the analysis of the constancy of assumed reference points brings positive results, they are transmitted to the visualisation platform module (7), and if the results are negative, the set of reference points XYH.STA is modified, and the actions indicated in items v to vii are carried out no more than n times, where n is the predefined number of repetitions.

Another aspect of the invention relates to a controller comprising a power supply system and a control unit, characterised in that the control unit is built of a power supply unit (PSU), processor, communication module, and total station module, wherein the controller is configured for:
1) receiving results from the measuring device and transmitting them to the central module,
2) producing and maintaining a measurement logbook (schedule),
3) controlling the measuring device, in particular the total station, by means of the total station module.

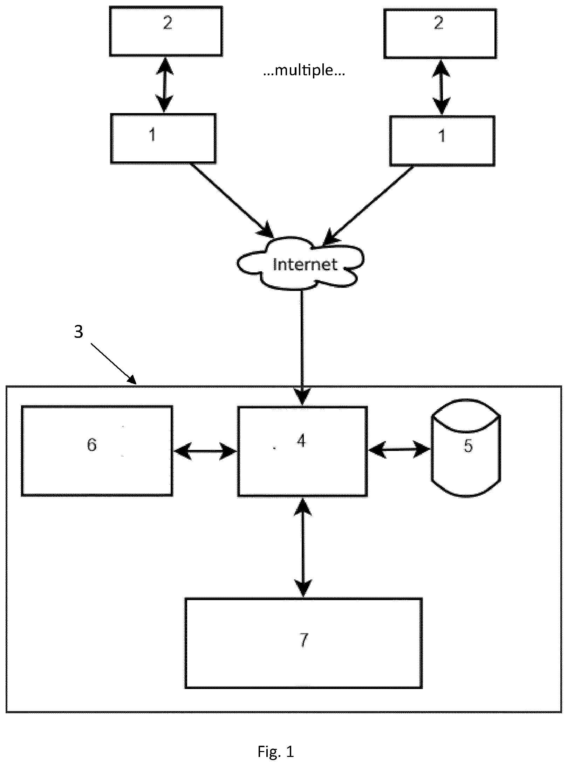

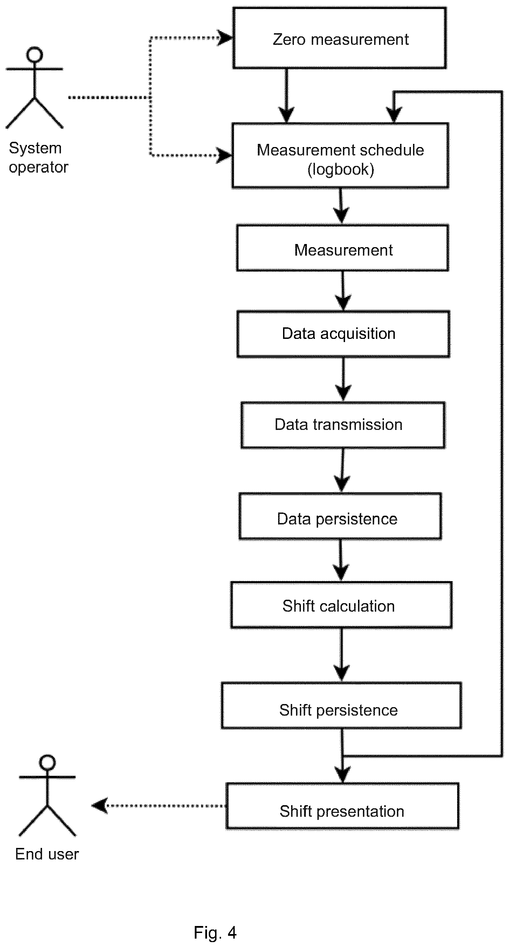

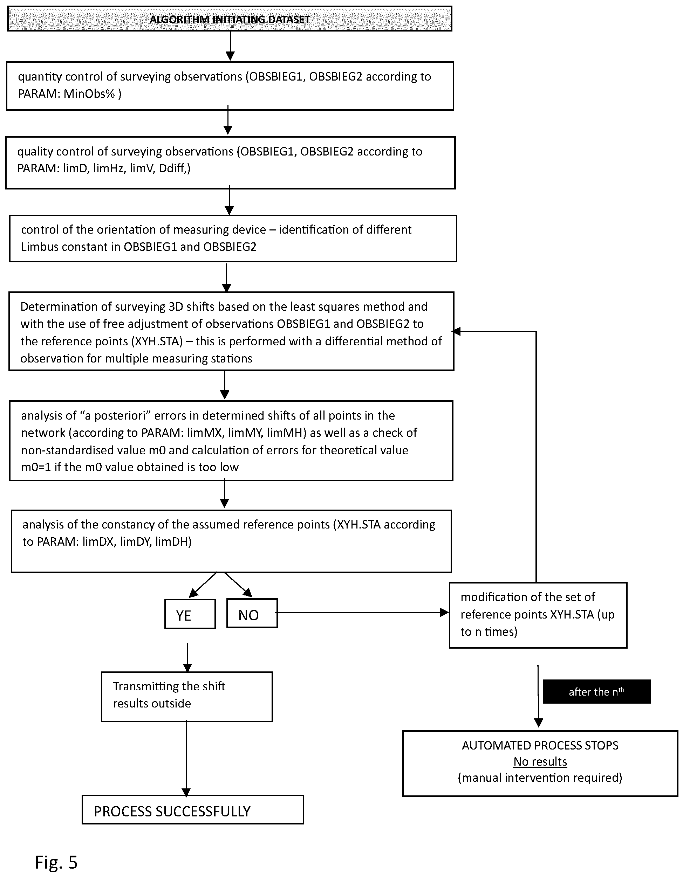

An embodiment of the invention is presented in the drawing, wherein Fig. 1 is a diagram showing the structure of the system according to the invention, Fig. 2 is a diagram showing the structure of the controller, Fig. 3 is a diagram showing the structure of the controller's control unit, Fig. 4 is a block diagram of showing the method according to the invention, and Fig. 5 is a block diagram showing the calculation and determination of shifts.

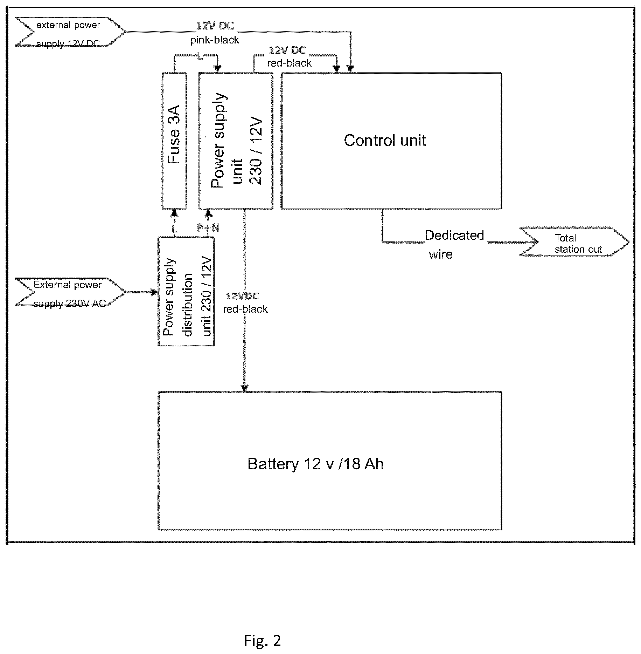

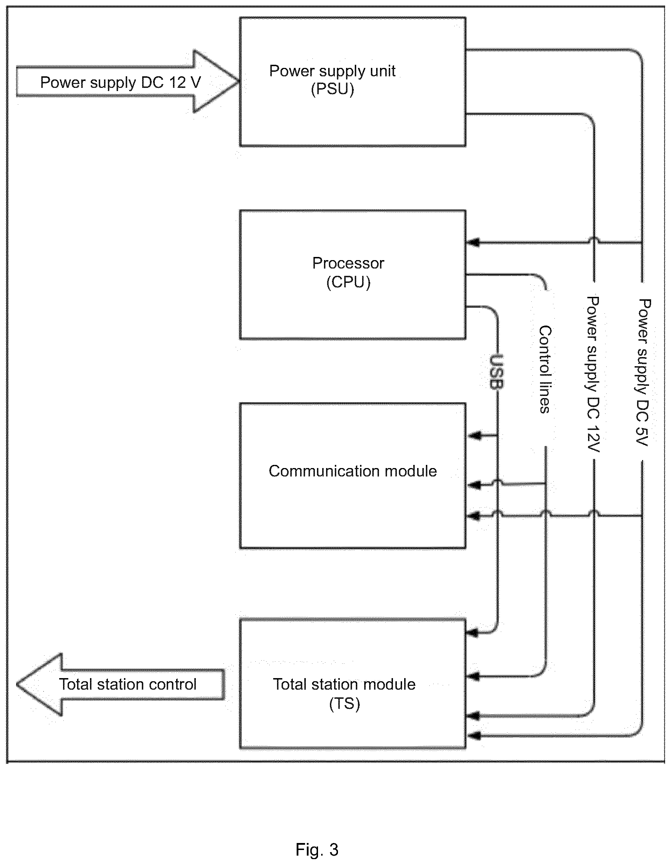

The system for calculating and visualising shifts in civil or engineering structures comprises at least one controller (1) linked on one side to a measuring device (2), in particular a total station (by wire or wirelessly), and to a central module (3) on the other side (by wire or wirelessly within a telecommunications network, e.g. the Internet or Intranet). The central module (3) comprising a module for controlling data flow (4) communicated wirelessly with the controller (1) and linked to a database module (5), shift determination system module (6) and a module of the platform (7) for transmitting and visualising user information, which is communicated by wire or wirelessly with the system user terminals. The controller (1) comprises a power supply system (sample structure of the power supply system is shown in Fig. 2) and a control unit. The control unit shown in Fig. 3 is built of a power supply unit (PSU), processor, communication module and total station module.

The controller (1) is configured for:
1) receiving results from the measuring device (2) and transmitting them to the central module (3),
2) producing and maintaining a measurement logbook (schedule),
3) controlling a measuring device (2), in particular the total station, by means of the total station module.

The central module (2) is configured for:
1) storing in the database module (5) the measurement results received each time from the controller(s) (1),
2) calculating and determining shifts in the shift calculation system module by means of a system of calculators and storing them in the database,
3) using levelling algorithms in such a way that they eliminate the impact of instability of the measuring station where it has been shifted,
4) processing data that includes shift calculations in order to transmit and visualise it to the system users via a visualisation platform module.

The system described above implements the method of calculation and visualisation of shifts in civil or engineering structures that uses data downloaded from measuring devices. Under this method, at least one controller:
1) produces and maintains a measurement logbook (schedule),
2) controls a measuring device (2) connected therewith, in particular a total station,
3) receives results from the measuring device (2) and transmits them to the central module (3).

The central module (2):
1) stores in the database module (5) the measurement results received each time from the controller(s) (1),
2) automatically calculates and determines shifts in the shift calculation system module (6) by means of a system of calculators and stores them in the database module (5),
3) uses levelling algorithms in such a way that they eliminate the impact of instability of the measuring station where it has been shifted,
4) processes data that includes shift calculations in order to transmit and visualise it to the system users via a visualisation platform module (7);
wherein the calculation and determination of shifts are carried out as follows:
i. the following data is collected in order to automatically calculate and determine a shift:
   OBS1 - zero observations
   OBS2 - current observations
   XYH.PRZ - coordinates of all points in the network XYH.STA - reference point coordinates
   SHIFT.OBS - addition constants for the observations SHIFT.RESULTS - addition constants for shift results PARAMS (limD, limHz, limV, aprioriD, aprioriHz, aprioriV, Ddiff, MinObs%, limMX, limMY, limMH, dDX, dDY, dDH) - control parameters: three values for admissible observation differences between the first and the second position of the telescope, three "a priori" error values for the observations, admissible difference in distance to the point between zero observations and current observations, minimum number of observations relative to zero observations expressed in percent, three values of admissible errors for shifts at each axis, three values determining the admissible shift of reference points for which the point is deemed not to have shifted,
ii. a quantity control is conducted for surveying observations (OBSBIEG1, OBSBIEG2 according to PARAM: MinObs% )
iii. quality control is conducted for surveying observations (OBSBIEG1, OBSBIEG2 according to PARAM: limD, limHz, limV, Ddiff,);
iv. a control is conducted for the orientation of the measuring device - identification of different reading circle constant in OBSBIEG1 and OBSBIEG2;
v. determination of surveying 3D shifts is carried out based on the least squares method and with the use of free adjustment of observations OBSBIEG1 and OBSBIEG2 to the reference points (XYH.STA) - this is performed with a differential method of observation for multiple measuring stations;
vi. an analysis is conducted for "a posteriori" errors in determined shifts of all points in the network (according to PARAM: limMX, limMY, limMH) as well as a check of non-standardised value m0 and calculation of errors for theoretical value m0=1 if the m0 value obtained is too low;
vii. an analysis is conducted for the constancy of the assumed reference points (XYH.STA according to PARAM: limDX, limDY, limDH);
viii. if the analysis of the constancy of assumed reference points brings positive results, they are transmitted to the visualisation platform module (7), and if the results are negative, the set of reference points XYH.STA is modified, and the actions indicated in items v to vii are carried out no more than n times, where n is the predefined number of repetitions.

The calculation uses the least squares method for adjusting the total station observations. The equation system for adjustments is formed on a differential basis based on starting and current measurements. The free network adjustment is used, wherein the shifts of reference points are also determined. Determination of the shifts of all points in the network is based on an analysis of the constancy of reference points conducted analytically based on assessing the significance of the shifts of reference points.

The computation algorithm is built of 32 consecutive functions that relate to the processing of numeric data of an active measuring object provided with one or more automatic total stations. The processing and computing functions are divided into:
(A) six groups (ses) that refer to the measuring of points on a prism:
   - preliminary data check (ses01 to ses07)
   - processing observations from matrix forms to horizontal shifts (ses08 to ses18)
   - determining parameters dXdY with the least squares method and performing an accuracy analysis (ses19)
   - processing observations from matrix forms to vertical shifts (ses19 to ses23)
   - determining parameters dH with the least squares method and performing an accuracy analysis (ses24)
   - main function SPINEYES that is responsible for analysing the constancy of reference points and approving the group of reference points or modifying the group of reference points and then juxtaposing shift results dXdY and dH
(B) one group (ses_CM) that refers to surveying calculations aimed at determining the coordinates of the points from the reflectorless measurement (ses_CM1 to ses_CM8).

The concept that led to the calculation method described above consisted in defining possible scenarios existing in the process of determining geodetic shifts independent of the initial data set and conformant with the methods of levelling surveying observations that have commonly been used to date, yet only on a manual or semi-automatic basis. Building a computational path for effective automatic determination of shifts required developing a homogeneous form of input data, defining boundary conditions for their quantity and quality, and preparing possible decision-making paths for the calculator, depending on the size of the measured object, its geometry, weather conditions at the object, and conditions depending on the environment, and on the type and class of the measuring instrument used.

The most characteristic feature of the method according to the invention is the method of identifying constant points in surveying network XYH.STA. It is carried out analytically by assessing the calculated shifts of points XYH.STA and errors in determining those shifts. Based on the obtained errors in determining shifts XYH.STA, we assess the significance of the shifts. We have developed a path for excluding an individual point within a single iteration and then adjusting the network again, which enables selecting the proper XYH.STA set.

In addition, the method according to the invention uses a tool for quantitative control of surveying observations OBSBIEG1 and OBSBIEG2. The tool checks input data sets and forms relations between them based on their correspondence and sequence. The tool allows for using the differential method of observation adjustment.

The method according to the invention additionally uses a tool for qualitative control of observations OBSBIEG1 and OBSBIEG2. Given the geometric conditions of the object, it checks the differences in observation values and compares them to those permitted for a particular object of measurement.

The issue of varying orientation of the horizontal wheel in the measuring device (due to replacing the device) has been resolved with a device for identifying the reading circle constant. The method involves finding the desired value, which makes it possible to use the method of calculating differences in azimuths from directional observations of the horizontal wheel.

We have developed tools that consider the constants for observing OBSBIEG2 and constants for shift results, which ensures continuity of delivering results in the event of physical damage or replacing the measuring point.

We have introduced the function that makes the errors in the determined shifts realistic by applying the theoretical value m0=1 in the case of low m0 values.

The visualisation of shifts made with this method is carried out with the use of charts, tables, juxtapositions, and maps of shifts as target products for the clients, e.g. site engineers, for the purpose of controlling and managing the risk to civil structures.

## Claims

1. A system of calculation and visualisation of shifts in civil or engineering structures that comprises:
1) at least one controller (1) linked on one side to a measuring device (2), in particular a total station, and to a central module (3) on the other side,
2) a central module (3) comprising a module for controlling data flow (4) communicated wirelessly with the controller (1) and linked to a database module (5), a shift determination system module (6), and a module of the platform (7) for transmitting and visualising user information, which is communicated by wire or wirelessly with the system user terminals,
wherein the controller (1) is configured for:
1) receiving results from the measuring device (2) and transmitting them to the central module (3),
2) producing and maintaining a measurement logbook (schedule),
3) controlling the measuring device (2), in particular, total station;
and the central module (2) is configured for:
1) storing in the database module (5) the measurement results received each time from the controller(s) (1),
2) calculating and determining shifts in the shift calculation system module by means of a system of calculators and storing them in the database,
3) using adjustment algorithms in such a way that they eliminate the impact of instability of the measuring station where it has been shifted,
4) processing data that includes shift calculations in order to transmit and visualise it to the system users via a visualisation platform module.

2. A method of calculation and visualisation of shifts in civil or engineering structures that uses data downloaded from measuring devices, **characterised in that** it uses the system described in claim 1, wherein
at least one controller (1):
1) produces and maintains a measurement logbook (schedule),
2) controls a measuring device (2) connected therewith, in particular a total station,
3) receives results from the measuring device (2) and transmits them to the central module (3).
and the central module (2):
1) stores in the database module (5) the measurement results received each time from the controller(s) (1),
2) automatically calculates and determines shifts in the shift calculation system module (6) by means of a system of calculators and stores them in the database module (5),
3) uses adjustment algorithms in such a way that they eliminate the impact of instability of the measuring station where it has been shifted,
4) processes data that includes shift calculations in order to transmit and visualise it to the system users via a visualisation platform module (7);
wherein the calculation and determination of shifts are carried out as follows:
i. the following data is collected in order to automatically calculate and determine a shift:
OBS1 - zero observations
OBS2 - current observations
XYH.PRZ - coordinates of all points in the network
XYH.STA - reference point coordinates
SHIFT.OBS - addition constants for the observations
SHIFT.RESULTS - addition constants for shift results
PARAMS (limD, limHz, limV, aprioriD, aprioriHz, aprioriV, Ddiff, MinObs%, limMX, limMY, limMH, dDX, dDY, dDH) - control parameters: three values for admissible observation differences between the first and the second position of the telescope, three "a priori" error values for the observations, admissible difference in distance to the point between zero observations and current observations, minimum number of observations relative to zero observations expressed in percent, three values of admissible errors for shifts at each axis, three values determining the admissible shift of reference points for which the point is deemed not to have shifted,
i. a quantity control is conducted for surveying observations (OBSBIEG1, OBSBIEG2 according to PARAM: MinObs% )
ii. a quality control is conducted for surveying observations (OBSBIEG1, OBSBIEG2 according to PARAM: limD, limHz, limV, Ddiff,);
iii. a control is conducted for the orientation of the measuring device - identification of different reading circle constant in OBSBIEG1 and OBSBIEG2;
iv. determination of surveying 3D shifts is carried out based on the least squares method and with the use of free adjustment of observations OBSBIEG1 and OBSBIEG2 to the reference points (XYH.STA) - this is performed with a differential method of observation for multiple measuring stations;
v. an analysis is conducted for "a posteriori" errors in determined shifts of all points in the network (according to PARAM: limMX, limMY, limMH) as well as a check of non-standardised value m0 and calculation of errors for theoretical value m0=1 if the m0 value obtained is too low;
vi. an analysis is conducted for the constancy of the assumed reference points (XYH.STA according to PARAM: limDX, limDY, limDH);
vii. if the analysis of the constancy of assumed reference points brings positive results, they are transmitted to the visualisation platform module (7), and if the results are negative, the set of reference points XYH.STA is modified, and the actions indicated in items v to vii are carried out no more than n times, where n is the predefined number of repetitions.

3. A controller comprising a power supply system and a control unit, **characterised in that** the control unit is built of a power supply unit (PSU), processor, communication module, and total station module, wherein the controller is configured for:
1) receiving results from the measuring device (2) and transmitting them to the central module (3),
2) producing and maintaining a measurement logbook (schedule),
3) controlling the measuring device (2), in particular the total station, by means of the total station module.
